# EUROPÄISCHE PATENTSCHRIFT

(11) **EP 0 698 954 B1**
(45) Veröffentlichungstag und Bekanntmachung des Hinweises auf die Patenterteilung: **20.01.1999**
(21) Anmeldenummer: 95810262.6
(22) Anmeldetag: 20.04.1995
(51) Int. Cl.: H02G 3/12, H02G 3/08

(54) **Einbaudose für elektrische Installationen**
Flush mounted box for electrical installations
Boîtier à affleurement pour installations électriques

(30) Priorität: 23.08.1994 CH 2585/94
(43) Veröffentlichungstag der Anmeldung: 28.02.1996
(73) Patentinhaber: Schwarz, Günter, CH-8804 Au ZH (CH)
(72) Erfinder: Schwarz, Günter, CH-8804 Au ZH (CH)
(74) Vertreter: Quehl, Horst Max, Dipl.-Ing.

(56) Entgegenhaltungen:
- EP-A- 0 408 514
- DE-U- 9 309 117
- FR-A- 1 324 292
- FR-A- 2 692 099
- NL-A- 8 901 996

## Beschreibung

Die Erfindung betrifft eine Einbaudose für elektrische Installationen entsprechend dem Oberbegriff des Patentanspruchs 1.

Eine für die Anordnung an einer Raumdecke vorgesehene Einbaudose dieser Art ist bekannt durch die FR-A- 1 324 292. Ihre beiden Teile haben jeweils ein zentrales Zapfenteil. Diese greifen ineinander und dienen der Aufnahme eines metallischen Befestigungselementes, das nagelartig zuerst der Befestigung an einem Schalungsbrett sowie der Halterung eines Beton-Verankerungselementes dient und das anschliessen zu einem Haken für Lampenbefestigungen umgebogen wird. Nachteilig ist, dass die beiden Kunststoffteile der Einbaudose aufgrund ihrer Formgebung viel Raum für die Aufbewahrung benötigen.

Der Erfindung liegt die Aufgabe zugrunde, eine Einbaudose zu finden, die zu erheblichen Vereinfachungen bei ihrer Handhabung und der Montage führt und die ausserdem leicht durch Kunststoffspritztechnik herstellbar ist.

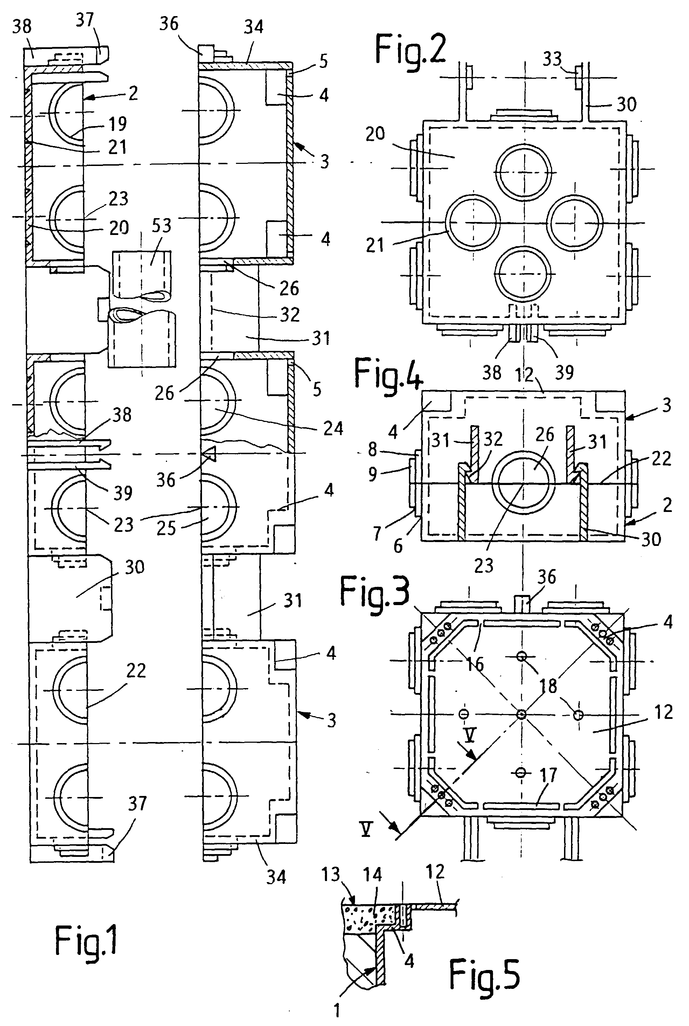

Die Lösung dieser Aufgabe erfolgt aufgrund der kennzeichnenden Merkmale des Patentanspruchs 1. Vorteilhafte Ausgestaltungen der Erfindung sind der folgenden Beschreibung anhand der Zeichnungen zu entnehmen. Die Figuren 1-5 zeigen Ausführungsbeispiele, die nicht unter die Ansprüche follen, ober für des Verständnis der Erfindung hilfreich sind.

Es zeigt:
- Fig. 1: eine teilweise geschnitten dargestellte Seitenansicht von drei durch Wandteile fest miteinander verbundene Einbaudosen,
- Fig.2: eine Ansicht der Unterseite einer endseitigen Einbaudose nach Fig. 1,
- Fig.3: eine Aufsicht auf die endseitige Einbaudose nach Fig. 1,
- Fig.4: einen Querschnitt senkrecht zur Teilungsebene durch die verbindenden Wandteile mit einer Seitenansicht der Einbaudose nach Fig.2,
- Fig. 5: einen Teilquerschnitt entlang der Linie V-V der Fig.3,
- Fig.6: eine teilweise geschnitten dargestellte Seitenansicht von drei durch Wandteile fest miteinander verbundene Einbaudosen entsprechend einer Ausführungsform der Erfindung,
- Fig.7: eine teilweise geschnittene Seitenansicht einer Einbaudose mit ineinander stapelbaren Dosenteilen,
- Fig.8: zwei ineinander gestapelte untere Dosenteile der Einbaudose nach Fig.7,
- Fig.9: eine teilweise geschnittene Seitenansicht einer dreiteiligen Einbaudose,
- Fig.10: Querschnitte entlang der Linie X-X der Fig.6,
- Fig.11: einen Teil einer Seitenansicht von zwei Dosenteilen in Richtung des Pfeiles XI der Fig.15, vor der Herstellung ihrer Rastverbindung,
- Fig.12: eine Aufsicht auf einen dem unteren Dosenteil zugeordneten Bereich der Darstellung nach Fig.ll,
- Fig.13: eine Ansicht gegen die Innenseite des oberen Dosenteils, mit zwei durch einen Klemmbügel an ihm gehaltenen Kabelrohren,
- Fig.14: einen Querschnitt entlang der Linie XIV-XIV der Fig.13,
- Fig.15: eine Aufsicht auf die oberen Dosenteile der Anordnung nach Fig.6 und
- Fig.16: eine Ansicht gegen die Unterseite der unteren Dosenteile der Anordnung nach Fig.15.

Eine erfindungsgemäss Einbaudose 1 hat einen unteren Dosenteil 2 und einen oberen Dosenteil 3, die im Spritzgiessverfahren unabhängig voneinander hergestellt worden sind und die vorzugsweise erst am Montageort miteinander verbunden werden.

Diese Herstellungsweise macht neuartige Ausgestaltungen der Einbaudose 1 möglich, so dass die Einbaudose 1 Hinterschneidungen aufweist, die bei einstückiger Herstellungsweise nicht möglich wären. Beispielsweise sind die verdickten Eckbereiche 4, die Löcher 5 für die Schraubbefestigung des Halterungsrahmens einer Steckdosen- oder Schaltarmatur aufweisen, zum Doseninneren hin versetzt angeordnet, so dass der Doseninnenraum ohne Vergrösserung der diagonalen Abmessungen grösser ist und dort folglich mehr Raum für Anschlussdrähte einer in die Einbaudose 1 einzubauenden elektrischen Armatur zur Verfügung steht.

Weiterhin sind Solltrennbereiche 6,7 und durch sie begrenzte kreisförmige Wandteile 8,9 Hinterschneidungen bildend über die Dosenwand 10 nach aussen versetzt, so dass zur Herstellung von jeweils einer Anschlussöffnung für ein Kabelrohr mit kleinerem oder grösserem Durchmesser ein Heraus trennen des betreffenden kreisförmigen Wandteiles 8,9 durch scheibenförmiges Abschneiden entlang eines Solltrennbereichs 6,7 auf einfache Weise erfolgen kann. Die kreisbogenförmigen Wandteile 8,9 enden jeweils in Verdickungen 11, durch die der Zustrom von Kunststoff in der Spritzform zu diesen Wandteilen 8,9 verberssert wird.

Weiterhin ist es durch die zweiteilige Herstellung einer Einbaudose 1 möglich, den oberen Dosenteil 3 einstückig mit diesem mit einer oberen dünnen Verschlusswand 12 zu versehen, die verhindert, dass beim Verputzen der die Einbaudose 1 aufnehmenden Wand 13 Mörtel 14 in die Einbaudose 1 eindringen kann. Entlang des Umfangs dieser Verschlusswand 12 sind durch kurze Solltrennstege 16 unterbrochene Schlitze 17 vorgesehen, in die ein Messer eingeführt werden kann, um die Solltrennstege 16 zum Freilegen des Doseninnenraumes durchzuschneiden, nachdem die Wand 13 fertig verputzt worden ist.

In der Verschlusswand 12 vorgesehene, verhältnismässig kleine Löcher 18 in der einstückig angeformten Verschlusswand 12 dienen dazu, den oberen Dosenteil 3 auf neuartige Weise an die Innenseite einer hölzernen Betonschalungswand anzunageln, bevor der untere Dosenteil 2 angefügt wird. Beim späteren Entschalen der Betonwand löst sich die Schalungswand entweder von den Nägeln ab oder diese werden mit ihr aus der Verschlusswand herausgerissen, indem hierfür geeignet kleine Nägelköpfe durch die Löcher 18 der aus Kunststoff geformten Verschlusswand 12 herausgezogen werden. Schliesslich wäre es auch möglich, die Solltrennstege 16, z.B. durch Einkerbung so schwach auszubilden, dass die Verschlusswand 12 dabei mit herausgerissen wird. Letztere Ausführungsform hätte jedoch den Nachteil, dass die Verschlusswand 12 den Doseninnenraum nicht mehr bei eventuell anschliessendem Verputzen der Betonwand schützen kann.

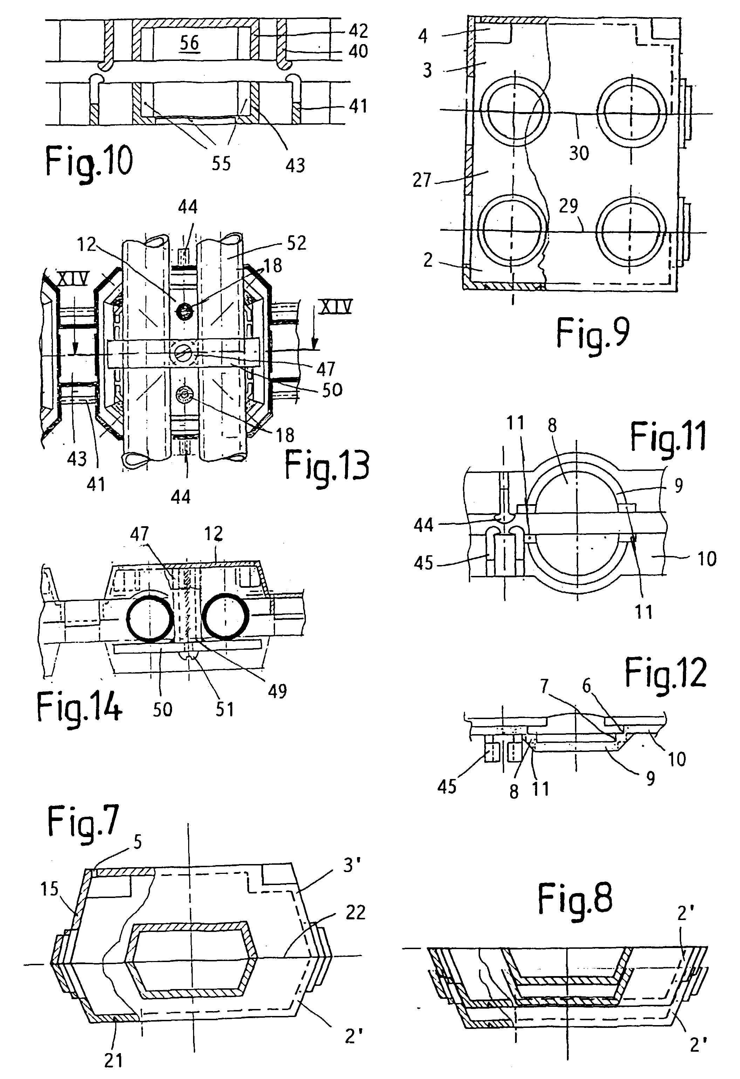

Die erfindungsgemässe zwei- oder mehrteilige Ausführung einer Einbaudose 1 mit der Teilungsebene parallel zum Boden der Einbaudose 1 mit Dosenteilen 2',3', die Schrägwände 15 aufweisen, hat den weiteren Vorteil, dass die Dosenteile 2',3' raumsparend ineinander stapelbar sind. Fig.8 veranschaulicht am Beispiel von zwei unteren Dosenteilen 2'die raumsparende Stapelbarkeit.

In der Bodenwand 20 des unteren Dosenteils 2 durch kreisförmige Kerblinien 21 vorbereitete kreisrunde Oeffnungen ermöglichen die Verrastung mit einer entsprechend geformte Erhebungen aufweisenden Verbindungsschiene, durch die einzelne erfindungsgemässe Einbaudosen miteinander oder verschiedene Einheiten aus einstückig miteinander verbundenen Einbaudosen entsprechend Fig.1 auch quer oder im Winkel miteinander verbunden werden können. Eine solche Art der Verbindung ist durch die eingangsgenante EP-B-0 408 514 bekannt.

Neben den bedeutenden Vorteilen der genannten, neuartigen Gestaltungsmöglichkeiten einer erfindungsgemässen Einbaudose hat die zweiteilige Ausführung, mit der Anordnung der Trennebene 22 derart, dass sie mindestens angenähert durch den Mittelpunkt 23 der kreisförmigen Anschlussöffnungen 24-26 für nichtdargestellte Kabelrohre verläufft, auch einen sehr bedeutenden Vorteil bei der Herstellung der Verbindung zwischen Einbaudosen und Kabelrohren. Bisher war es erforderlich, die einzeln verlegten, wenig flexiblen Kunststoffrohre mit ihrem Ende mit oft mühsamer Richtarbeit in die Aufnahmeöffnungen 24-26 der Einbaudosen 1 einzupassen. Aufgrund der Erfindung ist es möglich, zuvor die Kabelrohre entlang einer Zimmerwand zu verlegen und erst anschliessend den unteren Dosen teil 2 an der gewünschten Stelle unter das Kabelrohr einzuschieben, so dass es zwischen diesem und der Zimmerwand eingeklemmt ist. Anschliessend wird der obere Dosenteil 3 aufgesetzt, so dass er fest verrastet. Die dann quer durch die Einbaudosen 1 verlaufenden Teile der Kabelrohre können anschliessend aus der jeweiligen Einbaudose 1 herausgeschnitten werden.

Falls die Trennebene 23 zwischen den Dosenteilen 2,3 etwas in Richtung des oberen Dosenteils 3 versetzt ist und sich folglich die halbkreisförmigen Ausnehmungen 19 für die Anschlussöffnungen 24-26 geringfügig hinterschnitten sind, lässt sich der jeweilige untere Dosenteil 2 auf das Kabelrohr aufklemmen, so dass es an diesem bereits gehalten wird, bevor der obere Dosenteil 3 mit dem unteren verbunden wird.

Für die Anpassung der Tiefe der Einbaudose, wie es z.B. beim Anbringen einer dickeren Isolierschicht auf der Wand erwünscht ist, kann ein zusätzlicher Dosenzwischenteil 27 vorgesehen sein, wie es das Ausführungsbeispiel der Fig.9 zeigt. Eine solche Einbaudose hat somit zwei Trennebenen 29,30, die die Begrenzng zwischen dem Dosenzwischenteil 27 und dem unteren und oberen Dosenteil 2,3 bilden.

Für die Ausführung einer festen Verbindung zwischen den Dosenteilen 2,3 und 27 sind Rasteinheiten anstatt z.B. Schraubverbindungen zu bevorzugen, da durch sie die Verbindung einfach und schnell durch Aufdrücken eines der Dosenteil 2,3 auf das darunterliegende erfolgen kann.

Beispielsweise sind die Rasteinheiten bzw. ihre Rast- und Gegenrastmittel an den Stegwänden 30,31 im Querschnitt hakenförmig angeformt, die benachbarte Einbaudosen 1 fest miteinander verbinden. Bei der oberen Stegwand 31 verläuft der hakenförmige Querschnitt 32 über deren gesamte Länge, während er an der über die Trennebene 23 überstehenden Stegwand 30 nur an einem kurzen Hakenteil 33 ausgebildet ist. An der den Stegwänden 30,31 abgekehrten Seitenwand 34 der Einbaudosen 1 ist am oberen Dosenteil 3 eine Rastnase 36 angeformt, die zwischen den hakenförmigen oberen Enden 37 zweier die Seitenwand 34 verstärkender Rippen 38,39 einrastet.

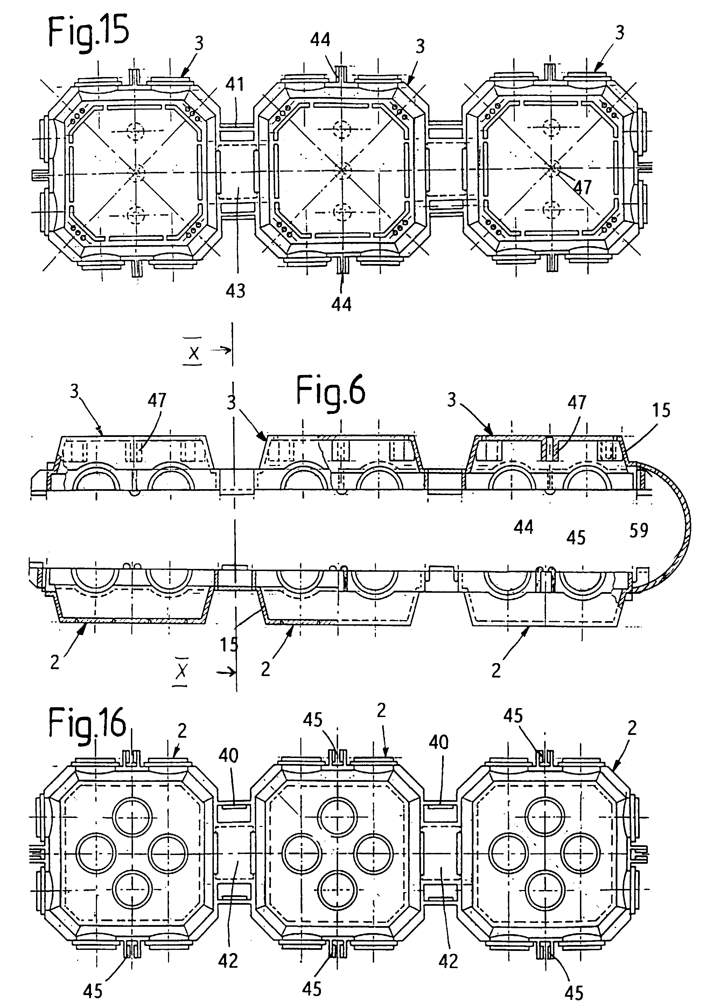

Beim Ausführungsbeispiel nach Fig.6, Fig.15 und 16 sind die Rasteinheiten 40,41 entsprechend der Detaildarstellung der Fig. 10 beidseitig mit Abstand neben im Querschnitt u-förmigen Verbindungskanälen 42,43 angeordnet, so dass die drei Einbaudosen 1 steifer miteinander verbunden sind.

Wie die Fig.15 und 16 zeigen, sind weitere Rasteinheiten 44, 45 an jeder Aussenseite der Einbaudosen angeformt.

Fig.13 und 14 zeigen eine Ausführungsform von Einbaudosen, bei der an der Verschlusswand 12 ein Befestigungsmittel 47 angeformt ist, so dass ein Befestigungselement 49 eines Klemmbügels 50 mit diesem in Eingriff gebracht werden kann. Beispielsweise besteht das Befestigungsmittel aus einem kurzen Hohlzapfen 47, in dem das selbstschneidende Gewinde einer Schraube 51 Verankerung findet, die den Klemmbügel 50 gegen die Kabelrohre 52 drückt. Diese Ausführungsform hat den Vorteil, dass die Einbaudose 1 oder Gruppe von Einbaudosen vor dem Betonieren der sie einschliessenden Betonwand fest an den zuvor an einer Betonschalungswand verlegten Kabelrohren gehalten werden können. Nach Entfernung der Schalungswand, an der der obere Dosenteil 3 mit seiner Verschlusswand 12 angenagelt gewesen ist, wird die Verschlusswand 12 aus der Einbaudose 1 herausgeschnitten und ebenfalls der die Einbaudose 1 durchquerende Teil der Kabelrohre 52. Dabei wird auch der Klemmbügel 50 mit seinem Befestigungselement 49,51 aus der Einbaudose 1 herausgenommen und kann für erneute Montagen wiederverwendet werden.

Nach Herstellung der Rastverbindung zwischen beiden Dosenteilen 2,3 bilden die genannten, gegeneinander gerichteten Verbindungskanäle 42,43 einen kurzen, benachbarte Einbaudosen 1 miteinander verbindenden Kabelkanal. der das Einsetzen des in Fig.1 gezeigten Rohrstückes 53 erübrigt. Da eine elektrische Querverbindung zwischen benachbarten Einbaudosen nicht bei jeder Anwendung benötigt wird, ist der Wandbereich der Einbaudosen 1, der zu diesen Querverbindungen führt vorerst verschlossen und muss ggfls. herausgeschnitten werden. Um dies zu erleichtern, sind die Ränder 55 betreffenden Wandbereiche 56 dünnerwandig ausgeführt, wie die Fig.10 veranschaulicht.

Um für die Rastverbindung der verschiedenartig gestalteten Dosenteile 2,3 nicht jeweils zueinander passende Teile suchen zu müssen, sind diese vorzugsweise entsprechend der Darstellung in Fig.6 durch eine flexible Lasche 59 miteinander verbunden.

## Patentansprüche

1. Einbaudose für elektrische Installationen, mit einem unteren und einem oberen Dosenteil (2,3), an denen für den gegenseitigen Eingriff ausgeführte Verbindungsmittel für die feste Verbindung beider Dosenteile vorgesehen sind und mit mehreren an der Einbaudose (1) vorbereiteten oder vorgesehenen Anschlussöffnungen (24-26) für den Anschluss von Kabelrohren, wobei die Teilungsebene (22) zwischen beiden Dosenteilen (2,3) mindestens angenähert durch die Mitte (23) von seitlich an der Einbaudose (1) vorgesehenen oder vorbereiteten Anschlussöffnungen (24,26) verläuft, dadurch gekennzeichnet, dass die Dosenteile (2',3') gleichartig, mit zur Trennungsebene hin schräg nach aussen verlaufenden Wänden (15) ausgeführt sind, so dass sie miteinander stapelbar sind.

2. Einbaudose nach Anspruch 1, dadurch gekennzeichnet, dass an der dem Doseninnenraum zugekehrten Seite Befestigungsmittel (47) angeformt sind, für die Herstellung einer Verbindung mit dem Befestigungselement (49) eines Klemmbügels (50) zum Anklemmen von mindestens einem Kabelrohr (52).

3. Einbaudose nach Anspruch 1 oder 2, gekennzeichnet durch ein drittes Dosenteil (27), das zur wahlweisen Vergrösserung der Dosentiefe zwischen dem oberen und unteren Dosenteil (2, 3) einsetzbar ist.

4. Einbaudose nach einem der Ansprüche 1 bis 3, dadurch gekennzeichnet, dass sie mit mindestens einer zweiten, gleichartigen, in Richtung der Teilungsebene (22) neben ihr angeordneten Einbaudose über Wandteile (30,31; 42,43) mit Abstand verbunden ist, die jeweils an beiden Dosenteilen (2,3) angeformt sind.

5. Einbaudose nach Anspruch 4, dadurch gekennzeichnet, dass an den verbindenden Wandteilen (30,31) der oberen und unteren Dosenteile (2,3) benachbarter Einbaudosen für den gegenseitigen Eingriff bestimmte Rastmittel (32,33) angeformt sind.

6. Einbaudose nach Anspruch 4, dadurch gekennzeichnet, dass die verbindenden Wandteile der oberen und unteren Dosenteile (2,3) benachbarter Einbaudosen jeweils einen im Querschnitt u-förmigen Verbindungskanal (42,43) bilden, so dass sie gemeinsam zwischen benachbarten Einbaudosen einen Kabelkanal formen, wobei an den betreffenden Umfangsstellen der Dosenteile (2,3) herausschneidbare Wandteile (56) vorgesehen sind, die die wahlweise Offnung zu dem Kabelkanal ermöglichen.

7. Einbaudose nach einme der Ansprüche 1 bis 3, dadurch gekennzeichnet, dass an mindestens einer Aussenwandfläche (34) der Dosenteile senkrecht zur Teilungebene verlaufende Rippen (38,39) angeformt sind, an denen sich Rastmittel (37) für die feste Verbindung beider Dosenteile befinden, wobei sich die Rippen (38,39) zumindest an einem der Dosenteile über die Trennebene (22) hinwegerstrecken, so dass ihr freiabstehender Teil für die Herstellung der Rastverbindung federnd ausbiegbar ist.

8. Einbaudose nach einem der Ansprüche 1 bis 7, dadurch gekennzeichnet, dass im Boden (20) des unteren Dosenteils (2) Rastöffnungen durch Schwächungslinien (21) vorbereitet sind, für den Eingriff von Rastmitteln eines Verbindungselementes für die Verbindung von Einbaudosen (1) mit Abstand voneinander.

9. Einbaudose nach einem der Ansprüche 1 bis 8, dadurch gekennzeichnet, dass in ihren Eckbereichen vorgesehenen Löcher (5) für die Schraubbefestigung des Halterungsrahmens einer Steckdosen- oder Schaltarmatur aufweisenden, verdickten Wandbereiche (4) zum Doseninneren hin versetzt angeordnet sind.

10. Klemmbügel für die Anklemmung von mindestens einem Kabelrohr an den oberen Dosenteil einer Einbaudose nach einem der Ansprüche 1 bis 9.

## Claims

1. Flush mounted box for electrical installations, with a lower and an upper box part (2, 3), on which are provided connecting means, designed for mutual engagement purposes, for the firm connection of the two box parts and with several connecting openings (24-26) provided or prepared on the flush mounted box (1) for the connection of cable conduits, the jointing plane (22) between the two box parts (2, 3) running at least approximately through the centre (23) of connecting openings (24, 26) provided or prepared laterally on the flush mounted box (1), characterized in that the box parts (2', 3') have an identical construction with walls (15) sloping outwards towards the jointing plane, so that they can be stacked with one another.

2. Flush mounted box according to claim 1, characterized in that on the side facing the box interior are shaped fastening means (47) for producing a connection with the fastening element (49) of a clamp (50) for clamping at least one cable conduit (52).

3. Flush mounted box according to claim 1 or 2, characterized by a third box part (27) usable for the selective increase in the box depth between the upper and lower box parts (2, 3).

4. Flush mounted box according to one of the claims 1 to 3, characterized in that it is spacedly connected by means of wall parts (30, 31; 42, 43) to at least one second, identical flush mounted box juxtaposed therewith in the direction of the jointing plane (22) and which are in each case shaped on both box parts (2, 3).

5. Flush mounted box according to claim 4, characterized in that locking means (32, 33), intended for the mutual engagement, are shaped on the connecting wall parts (30, 31) of the upper and lower box parts (2, 3) of adjacent flush mounted boxes.

6. Flush mounted box according to claim 4, characterized in that the connecting wall parts of the upper and lower box parts (2, 3) of adjacent flush mounted boxes in each case form a cross-sectionally U-shaped connecting channel (42, 43), so that they together form between adjacent flush mounted boxes a cable duct and at the relevant circumferential points of the box parts (2, 3) are provided cut-out wall parts (56), which permit the selective opening to the cable duct.

7. Flush mounted box according to one of the claims 1 to 3, characterized in that on at least one outer wall surface (34) of the box parts are shaped ribs (38, 39) running perpendicularly to the jointing plane and on which are located locking means (37) for the firm connection of both box parts, the ribs (38, 39), at least on one of the box parts, extending over and beyond the jointing plane (22), so that the freely projecting part thereof can be resiliently bent out for producing the locking connection.

8. Flush mounted box according to one of the claims 1 to 7, characterized in that, in the bottom (20) of the lower box part, locking openings are prepared through weakening lines (21) for the engagement of the locking means of a connecting element for the spaced interconnection of flush mounted boxes (1).

9. Flush mounted box according to one of the claims 1 to 8, characterized in that holes (5) provided in their corner areas are displaced towards the interior of the box for the screw fastening of the supporting frame of thickened wall areas (4) having a socket or switching fitting.

10. Clamp for clamping at least one cable conduit to the upper box part of a flush mounted box according to one of the claims 1 to 9.

## Revendications

1. Boîtier à affleurement pour installations électriques, comportant une pièce inférieure et une pièce supérieure de boîtier (2,3), sur lesquelles des moyens de fixation réalisés pour l'engagement réciproque sont prévus pour un assemblage ferme des deux pièces de boîtier, ainsi que plusieurs ouvertures de branchement (24-26) préparées ou prévues sur le boîtier à affleurement (1) pour le branchement de conduits de câble, le plan de joint (22) entre les deux pièces de boîtier (2,3) passant par le centre, ou au moins à proximité du centre (23) des ouvertures de branchement (24-26) prévues ou préparées latéralement sur le boîtier d'affleurement (1), **caractérisé en ce que** les pièces de boîtier (2',3') sont réalisées de manière similaire, avec des parois (15) inclinées vers l'extérieur en se rapprochant du plan de joint, de sorte qu'elles peuvent être empilées l'une sur l'autre.

2. Boîtier à affleurement selon revendication 1, **caractérisé en ce que** des moyens de fixation (47) sont formés sur la face orientée vers l'intérieur du boîtier, pour la réalisation d'une attache avec l'élément de fixation (49) d'un serre-câbles (50) pour le serrage d'un conduit de câble au moins (52).

3. Boîtier à affleurement selon revendication 1 ou 2, **caractérisé en ce qu'**une troisième pièce de boîtier (27) peut être mise en place entre la pièce supérieur et la pièce inférieure de boîtier (2,3) pour un agrandissement optionnel de la profondeur de boîtier.

4. Boîtier à affleurement selon l'une des revendications 1 à 3, **caractérisé en ce qu'**il est relié avec un espacement à au moins un second boîtier à affleurement de même type, disposé à côté de lui en direction du plan de joint (22), par des pièces de paroi (30,31; 42,43) formées sur chacune des deux pièces de boîtier (2,3).

5. Boîtier à affleurement selon revendication 4, **caractérisé en ce que** des moyens d'enclenchement (32,33) définis sont formés pour l'engagement réciproque sur les pièces de paroi (30,31) des pièces de boîtier supérieure et inférieure (2,3) reliant des boîtiers à affleurement adjacents.

6. Boîtier à affleurement selon revendication 4, **caractérisé en ce que** les pièces de paroi des pièces de boîtier supérieure et inférieure (2,3) reliant des boîtiers à affleurement adjacents forment chacune un conduit de liaison (42,43) à section en forme de U, sorte qu'elles forment ensemble une canalisation de câble entre boîtiers à affleurement adjacents, des pièces de paroi (56) pouvant être coupées étant prévues aux emplacements correspondants sur le pourtour des pièces de boîtier (2,3), lesdites pièces de paroi (56) permettant une ouverture optionnelle vers la canalisation de câble.

7. Boîtier à affleurement selon l'une des revendications 1 à 3, **caractérisé en ce que** des nervures (38,39) continues sont formées perpendiculairement au plan de joint sur au moins une surface de paroi extérieure (34) des pièces de boîtier, des moyens d'enclenchement (37) pour l'assemblage ferme des deux pièces de boîtier se trouvant sur lesdites nervures (38,39), lesquelles s'étendent en dépassant le plan de joint (22) au moins sur une des pièces de boîtier, de sorte que leur partie dépassant librement peut être élastiquement pliée afin de réaliser l'assemblage par enclenchement.

8. Boîtier à affleurement selon l'une des revendications 1 à 7, **caractérisé en ce que** des ouvertures d'enclenchement sont préparées par des lignes d'atténuation (21) sur le fond (20) de la pièce inférieure de boîtier (2), pour le passage de moyens d'enclenchement d'un élément d'assemblage pour la liaison de boîtiers à affleurement (1) espacés l'un de l'autre.

9. Boîtier à affleurement selon l'une des revendications 1 à 8,**caractérisé en ce que** des zones de paroi (4) épaissies sont disposées en déport vers l'intérieur du boîtier, lesquelles présentent des orifices (5) prévus dans leurs angles pour la fixation par vis du cadre de serrage d'une armature de prise femelle ou d'une armature de commutation.

10. Serre-câbles pour le serrage d'au moins un conduit de câble sur la pièce supérieure de boîtier d'un boîtier à affleurement selon l'une des revendications 1 à 9.
